# EUROPEAN PATENT APPLICATION

(11) **EP 2 073 143 A1**
(43) Date of publication of application: **24.06.2009**
(21) Application number: 07024428.0
(22) Date of filing: 17.12.2007
(51) Int. Cl.: G06K 7/00, G06K 19/07, G06F 3/16, G07C 9/00, G10L 15/00, G08B 3/00

(54) **Techniques for controlling access to RFID transponders**

(71) Applicant: Vandinburg GmbH, 30539 Hannover (DE)
(72) Inventor: Hölzer, Max, 30539 Hannover (DE); Schildmann, Frederik, 31311 Uetze (DE)
(74) Representative: Röthinger, Rainer

(57) **Abstract**

The invention relates to techniques for controlling access to RFID transponders (102). A method embodiment of the invention comprises the steps of receiving speech input (110); and initiating, based on the received speech input, execution of an access command (132) related to the RFID transponder (102).

## Description

### Technical Field

The invention relates to techniques for controlling access to RFID transponders. More specifically, the invention relates to control devices enabling a human operator to perform access operations such as read/write operations related to RFID transponders.

### Background

RFID (Radio Frequency IDentification) is a technique for automatically identifying objects, such as products, containers, warehouse stocks, but also animals or even human beings, by contact-free data transmission in the RF (Radio Frequency) range. Besides contact-free identification and also localization, RFID may also be used for the automatic gathering and storage of data, for example data related to the products, containers, etc.

RFID requires an RFID transponder and an RFID reader. The RFID transponder (also occasionally termed "RFID tag") is typically mounted on, in or otherwise associated with the object to be identified. The RFID reader is provided for reading label information stored on the transponder. The label information may comprise an ID number used to identify the object, and may comprise further data, such as a time point or range, a name of an authority or a sender or source of the object, product-related data, etc. Some RFID transponders carry fixed label information, which is, e.g., stored in the transponder once during manufacture and cannot be changed afterwards. Other RFID transponders comprise a storage component such as an EEPROM (Electrically Erasable Programmable Read Only Memory), which can be written one time or multiple times during the lifetime of the transponder.

RFID writer devices are required to write data to re-writable RFID transponders. The writing operation may be performed using the same RF interface, over which a read operation of the RFID transponder is performed. An RFID reader and/or writer (RFID reader/writer for short) comprises an antenna, a control processor for controlling reading/writing operations, and a functional interface component for interfacing with computer systems and/or databases.

Accessing an RFID transponder may comprise read operations, write operations and further operations for, e.g., configuring an RFID circuitry or a communication connection via the RF interface.

The RFID technology is rapidly expanding and tends to replace other identification methods such as, for example, barcodes. This is due to the fact that the label information can be read from transponders contact-free, RFID transponders can be made small and can be manufactured at low prices.

Although RFID read/write operations can efficiently be performed over the contact-free RF interface, there are problems in situations involving human operators or users. For example, barcode tags may be applied manually to objects or may be read manually or using an optical scanner device. Thus, providing an ID number to an object or reading an ID number from it can be performed fast even by manual activity. In the RFID case, an RFID reader typically has to be instructed to read an RFID transponder located within its antenna coverage. Writing an ID number to an RFID transponder requires also a corresponding instruction to an RFID writer. Therefore the user requires a keypad or keyboard to manually enter read/write commands and a display to present the RFID label information to the user. Naturally, manually typing ID numbers or other data into a keypad is more time-consuming and error-prone as simply fixing or scanning a barcode. This holds in particular in situations in which the user moves, for example in a warehouse, and/or user-controlled writing/reading operations have to be performed at high rate, for example at a conveyor band.

### Summary

There is a need for a technique allowing to control an access to RFID transponders in a fast and reliable way in case of user-controlled access systems.

This demand is satisfied by a method for controlling access to an RFID transponder. The method comprises the steps of receiving speech input; and initiating, based on the received speech input, execution of an access command related to the RFID transponder.

The speech input may comprise one or more words spoken by a human user or operator. The words may represent access commands or access command parameters in human language. The words may directly represent the command or may be any transcription or periphrasis thereof. As a concrete example, the spoken word representing a write command may be "write", but may also be "print" or may be the word 'write' in a different language, such as the German word "schreibe".

The access command may be any command for accessing the RFID transponder. For example, the access command may be a read command for reading label information from the RFID transponder, or may be a write command for writing label information to the RFID transponder. The label information may comprise an identification number, but may additionally or alternatively comprise other data such as dates, names, brands, etc. Other access commands may be directed to a configuration of the transponder or the establishment of a communication link with the transponder via an RF interface.

Multiple access commands may be executed based on the received speech input. For example, a speech input "write ID" may lead to the execution of a write command, followed by the execution of a read command in order to verify the successful execution of the write process.

The step of initiating execution of the access command may comprise converting the speech input into at least one of the read command and the write command; and providing the read and/or write command to at least one of an RFID reader and RFID writer. For example, a speech recognition system may be used for converting the speech input. The output of the speech recognition system may be provided to one or more RFID readers/writers.

The access command as well as the access command parameters such as ID number may be derived from the speech input, from pre-stored data, or a combination thereof. Accordingly, one implementation of the method comprises the further step of automatically determining, triggered by the speech input, at least a portion of the label information from predefined information. For example, a speech input such as "write next" or even only "write" may trigger execution of a write command which writes the next available free ID number onto an RFID transponder. No representation of a label information may be extracted from the speech input in such cases, but any label information may entirely be determined from predefined or pre-stored data.

In another realization of the method, at least a portion of the label information may be determined based on the speech input. For the command a default may be chosen. For example, a speech input such as "2345" may be interpreted by default as a write command for writing the ID number 2345 to an RFID transponder. In still another realization of the method, neither a command nor label information is directly extracted from the speech input, but is determined from pre-stored data. For example, the speech input "ID" may trigger writing of the next available ID number to an RFID transponder.

In case the label information is determined in total or in part from predetermined data, it may be determined from a predefined mapping, in which input parameters determined from the speech input are associated with at least portions of the label information. For example, an input parameter may be "ID number" which is determined from a speech input "ID". A label mapping table may comprise an entry, in which the input parameter "ID number" is associated with the next available ID number, e.g., 2345.

One realization of the method comprises the steps of transforming the received speech input into a text string comprising one or more input words; comparing each one of the one or more input words with context mapping words in a context mapping table, the context mapping words being associated with at least one access command function for providing an access command for an RFID access device; and identifying, in case at least one of the one or more input words matches with one of the context mapping words, the access command function associated with the matching context mapping word.

In this realization, a context mapping word may represent in textual form an aspect of the access command or a command parameter the context mapping word is associated with. For example, the context mapping table may comprise as context mapping words "write", "print" and "schreibe", wherein each of these words is associated with one and the same write command for writing label information to an RFID transponder. In this example, multiple context mapping words represent different alias names of one and the same access command. Also, multiple context mapping words may represent different alias names for one and the same access command parameter. For example, the input words "ID" and "ID number" may both be associated with a function for determining the next available ID number to write onto an RFID transponder.

Multiple RFID transponders may be accessed based on the received speech input. For example, a speech input "read all" may lead to the execution of multiple read commands in order to read ID number and/or further label information from all RFID transponders currently within the antenna range of an RFID reader or traversing the antenna field during a predetermined time span. Also multiple write commands to several RFID transponders may be executed based on a single speech input.

One variant of the method comprises further the step of providing an acoustic output indicative of the label information. For example, an ID number written to or read from an RFID transponder may be output acoustically for human perception. The acoustic output may directly or indirectly represent the read/write label information. For example, only the last three digits of an ID number may be output.

The above demand is further satisfied by using a speech recognition system for controlling access to an RFID transponder. For example, the speech recognition system may output a recognized text string representing a speech input to a control component for converting the text string into a sequence of access commands, which then may be fed to an RFID reader/writer. The control component may also be a part of the speech recognition system. In such variants, the speech recognition system is adapted to provide, based on a speech input, an access command related to the RFID transponder.

The above demand is moreover satisfied by a computer program product comprising program code portions for performing the steps of any one of the preceding claims when the computer program product is executed on one or more computing devices, for example an access device for accessing an RFID transponder and/or a device implementing a speech recognition system. The computer program product may be stored on a computer readable recording medium, such as a permanent or rewriteable memory within or associated with a computing device or a removable CD-ROM, DVD or USB-stick. Additionally or alternatively, the computer program product may be provided for download to a computing device, for example via a data network such as the Internet or a communication line such as a telephone line or wireless link.

Further, the above demand is satisfied by an RFID control device for controlling access to an RFID transponder. The access device comprises a first component adapted to receive speech input; and a second component adapted to initiate, based on the received speech input, execution of an access command related to the RFID transponder.

In one variant, the RFID control device comprises at least one of an integrated RFID reader and RFID writer. For example, the control device may be notebook having a software installed which implements one of the method aspects summarized above and having an RFID reader card inserted into a card slot.

The above demand is still further satisfied by a context mapping table comprising context mapping words for comparison with input words representing a speech input in a speech recognition system, wherein the context mapping words are associated with at least one access command function for providing access commands for an RFID access device. The context mapping table may be stored on a storage component such as a removable medium, e.g. an USB stick.

### Brief Description of the Drawings

In the following, the invention will further be described with reference to exemplary embodiments illustrated in the figures, in which:
- Fig. 1: schematically illustrates a first embodiment of an RFID control device for controlling access to an RFID transponder;
- Fig. 2: is a flow diagram illustrating an operation of the RFID control device of Fig. 1;
- Fig. 3: illustrates details of the context mapping table used by the RFID control device of Fig. 1;
- Fig. 4: schematically illustrates a second embodiment of an RFID control device for controlling access to an RFID transponder;
- Fig. 5: is a flow diagram illustrating an operation of the RFID control device of Fig. 4.

### Detailed Description of Preferred Embodiments

In the following description, for purposes of explanation and not limitation, specific details are set forth, such as specific arrangements of speech recognition components and access components for accessing RFID transponders, in order to provide a thorough understanding of the current invention. It will be apparent to one skilled in the art that the current invention may be practised in other embodiments that depart from these specific details. In fact, the invention may be practised in very different environments. This may include, for example, network-based and/or client-server based scenarios, in which at least some of speech recognition components, context mapping components and RFID access components are remotely arranged from each other and/or are accessible via servers in a Local Area Network (LAN) or Wide Area Network (WAN). Wireless or wireline communication links may be used for communication between any of these various components.

Those skilled in the art will further appreciate that functions explained hereinbelow may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the current invention is described as a method, it may also be embodied in a computer processor and a memory coupled to a processor, wherein the memory is encoded with one or more programs that perform the methods disclosed herein when executed by the processor.

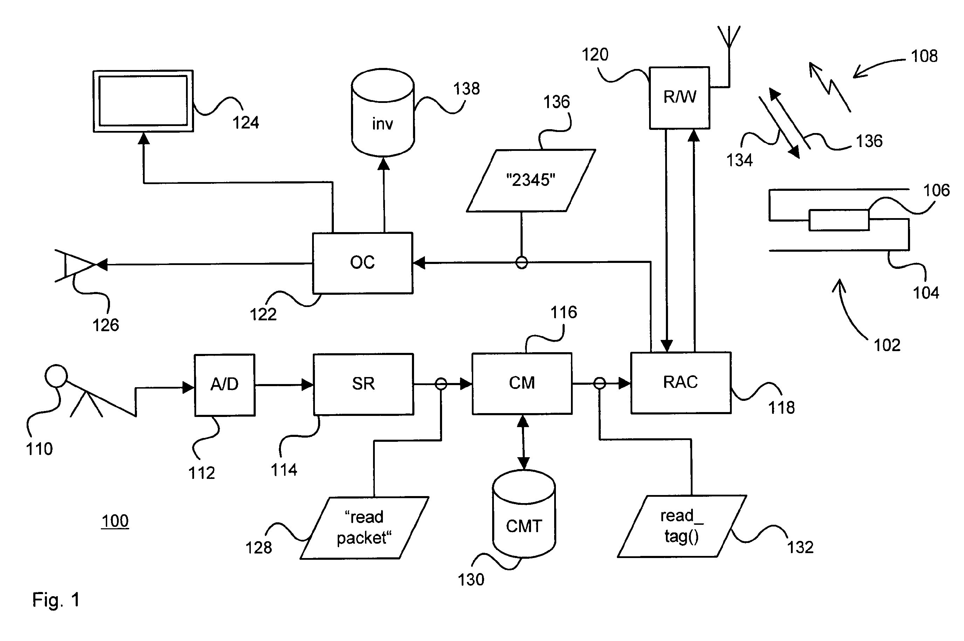

Fig. 1 schematically illustrates an embodiment of an RFID control device 100 for controlling access to an RFID transponder 102. The RFID transponder 102 comprises an antenna portion 104 as well as processing circuitry 106 and may be any transponder adapted to store label information such as an ID number with a given number of bits. The ID number stored in RFID transponder 102 may be read out via RF interface 108. The RFID transponder 102 may be attached to or mounted in or on an object (not shown) such as a product, a pallet, a container, etc.

The RFID control device 100 comprises a microphone 110 serving as an acoustic input device to the RFID control device 100, an analogue/digital (A/D) converter 112, a speech recognition (SR) component 114, a context mapping (CM) component 116, an RFID access controller (RAC) 118. An RFID access device (reader/writer "R/W" device) 120 is adapted to communicate via radio-interface 108 with RFID transponders such as transponder 102 and is controlled by RFID control device 100. The RFID control device 100 comprises an output control (OC) component 122 for controlling an output of label information related to transponder 102 onto, e.g., a display 124 and a loudspeaker 126.

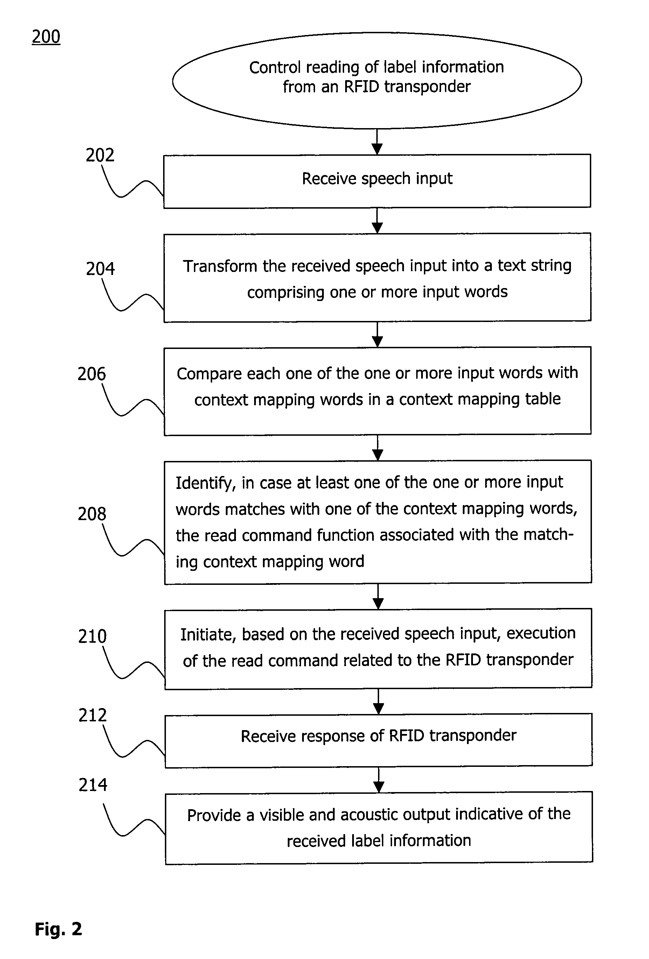

An exemplary operation of the RFID control device 100 will now be described with reference to a sequence 200 of operational steps illustrated in Fig. 2. The operational sequence 200 is a concrete embodiment of a technique for accessing an RFID transponder; namely, the sequence 200 illustrates a technique for reading label information such as an ID number from an RFID transponder such as transponder 102.

In step 202, the RFID control device 100 receives speech input. Specifically, a human user (not shown in Fig. 1) speaks into microphone 110. The resulting analogue speech signal is converted in A/D converter 112 into a digital signal. The digital signal is then provided to speech recognition component 114. This component operates, in step 204, to transform the received speech input into a text string 128 "read packet" representing the speech input. The text string 128 thus comprises the input words "read" and "packet".

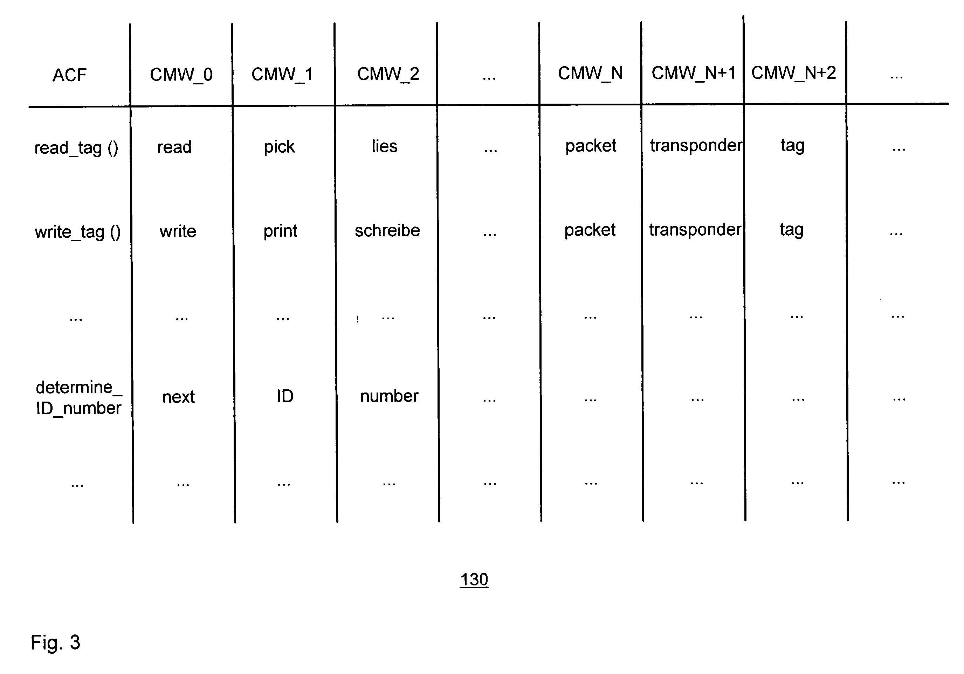

The text string 128 is provided to the context mapping component 116. In step 206, the component 116 compares each one of the input words of text string 128 with context mapping words in a context mapping table (CMT) 130. The CMT 130 is illustrated in Fig. 3. In the CMT 130, context mapping words CMW_0, CMW_1, ... are associated with access command functions (ACF), wherein each ACF may implement a function for preparing the execution of an access command for accessing one or more RFID transponders. The preparation may comprise at least one of preparing the command itself and preparing command parameters related to the specific command. Such a command parameter may, e.g., be a particular ID number for a write command directed to write the ID number to an RFID transponder.

As illustrated in Fig. 3, the ACF "read_tag ()" is associated with various context mapping words which a human operator may possibly use to indicate that a read operation should be performed with respect to an RFID transponder. As examples, "read", "pick" and the German expression for "read", namely "lies", are illustrated. The sequence of the context mapping words associated with an ACF in the corresponding row of CMT 130 does not play any role. For example, another embodiment of a context mapping table may list the context mapping words for the ACF "read_tag ()" in the order CMW_0 = "lies", CMW_1 = "read" and CMW_10 = "pick". A typical CMT may for example provide up to 256 context mapping words per ACF, or more. However, only as many context mapping words may be associated with an ACF as required by the particular function.

Referring again to CMT 130 in Fig. 3, further context mapping words related to the reading operation controlled by the ACF "read_tag ()" refer to the RFID transponder. For example, a user may possibly input speech like "read transponder" or "read tag". Therefore, the corresponding context mapping words "transponder" and "tag" are also associated with the ACF "read_tag ()". Still further, the user may refer to the object, with which the RFID transponder is associated. For example, the operator may provide a speech input like "read container", "read product", or "read packet". Therefore, context mapping words such as "container", "product", "packet" should be given in association with the reading function "read_tag ()", as partly illustrated in Fig. 3.

Referring now back to step 206 in the operational sequence 200 of Fig. 2, the context mapping component 116 compares each of the input words "read" and "packet" of text string 128 (cf. Fig. 1) to each of the context mapping words in the CMT 130 in storage component 130. In step 208, the context mapping component 116 identifies one or more access commands functions based on the comparison of step 206. Specifically, the CM component 116 determines from the CMT 130 the functions associated with those context mapping words, which match with the input words of text string 128. In the example illustrated in the figures, the input words "read" and "packet" match to the context mapping words CMW_0 and CMW_N (N may be any value, for example, N = 7, or N = 214) in the row corresponding to the ACF "read_tag ()" in the context mapping table 130.

One and the same context mapping word may appear several times in a context mapping table. For example, CMT 130 comprises the context mapping word "packet" also in association with the ACF "write_tag ()", which may be a function provided in order to control a writing operation of label information to an RFID transponder. The context mapping word should be provided for such a function, as a human user may probably input speech such as "write [ID number to] packet". In order to identify the correct ACF, the context mapping component may apply a best match principle. For example, while two of the context mapping words associated with the ACF "read_tag ()" match to input words, only one of the context mapping words associated with the ACF "write_tag ()" matches to the input words. The ACF "read_tag" may thus be the function best matching to the input text string 128.

It has to be noted that the steps 206 and 208 may be performed in parallel or even repeatedly in order to identify the intended ACFs in the context mapping table 130.

The context mapping component 116 indicates the identified function "read_tag ()" 132 to the RFID access controller 118, which accordingly prepares an access operation to RFID transponder 102. In particular, the function "read_tag ()" has been provided to the controller 118 without arguments, i.e. no command parameters have been identified in steps 206 and 208. Consequently, the RFID access controller 118 may (implicitly) conclude that a read operation related to the or any RFID transponder within the antenna coverage of RFID reader/writer device 120 is intended by the human user. Therefore, in step 210 the RFID access controller 118 initiates execution of an unspecific read command (without specific ID number) via radio interface 108.

As another example not illustrated in the figures, consider a speech input and corresponding text string comprising as input word a specific ID number such as "2345". The context mapping component may be adapted to identify each input word representing a number as a command parameter to be forwarded as such to the RFID controller. A text string as "read packet 2345" may then lead to the execution of a read operation requesting a response only from the RFID transponder carrying "2345" as ID number, in case this transponder is inside an antenna coverage. Such operation may be useful to determine whether an object associated with the transponder is actually present, or to request further label information stored on this specific transponder such as data related to the associated object.

Referring back to step 210 in Fig. 2, the RFID access controller 118 operates in response to the indication 132 of the function "read_tag ()" without parameters to initiate execution of the corresponding access command Read_Tag. In particular, the controller 118 controls RFID reader/writer device 120 in order that the device 120 performs the read operation 134 corresponding to the access command Read_Tag via RF interface 108. In the example illustrated in Fig. 1, RFID transponder 102 is inside antenna coverage of the reader/writer device 120 and responds by transmitting its ID number 136 (and possibly further label information stored thereon) via the RF interface 108.

In step 212, the response 136 of transponder 102 is received at the reader/writer device 120. A signal corresponding to the response 136 is provided to the RFID access controller 118, which forwards the signal to the output control component 122. In the example illustrated in Fig. 1 it is assumed that the ID number "2345" (reference numeral 136) has been provided by the RFID transponder 102 in response to the read command 134. The output control component 122 generally operates to output the ID number 136 to one or more output devices and/or storage media. The OC component 122 may output the ID number 136 in a way adapted for human perception in the specific operational environment. For example, in step 216 the OC component 122 may provides a visible and acoustic output indicative of the ID number 136 on the display 124 and/or the loudspeaker 126. For performing the acoustic output, the OC component 122 may, e.g., comprise a text-to-speech software and/or hardware module on a general computing device such as a notebook, personal computer, etc.

Furthermore, the OC component 122 may store the received label information 136 in a data file on a storage component 138. The data file may for example be a log file for logging purposes, or may be an inventory ("inv") file for holding an inventory list of objects. In this case, the received ID number 136 may automatically be associated with a particular data record which may have been generated in conjunction with the initiation of the read operation in step 210. Alternatively, a pre-existing data record may have been marked by the human user and the received ID number 136 is inserted automatically therein.

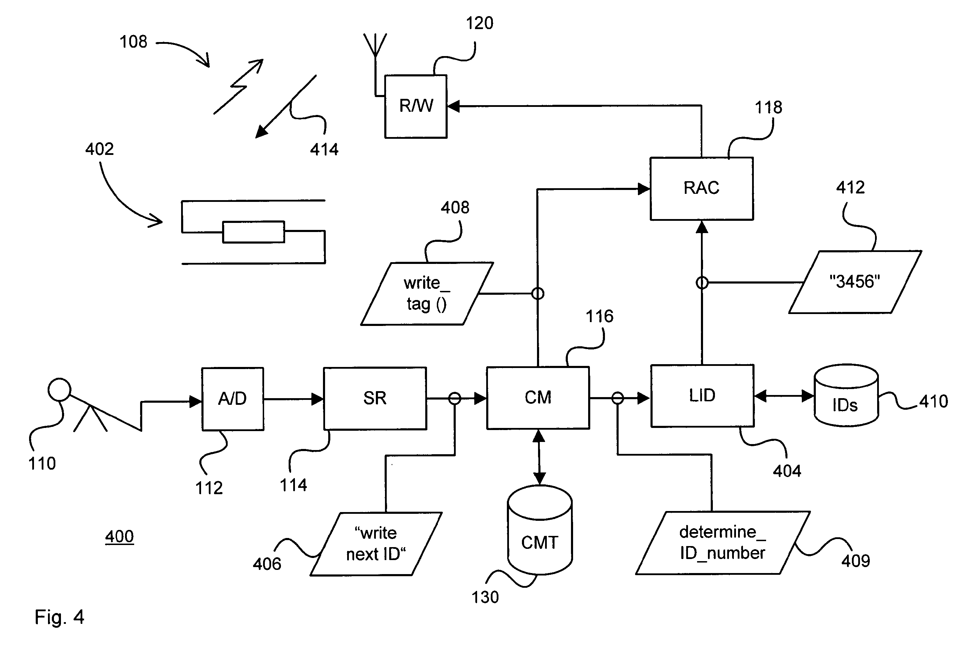

Fig. 4 schematically illustrates an embodiment of an RFID control device 400 for accessing an RFID transponder 402. A number of components of RFID control device 400 are assumed to function and interact in a similar way as do corresponding components of RFID control device 100 of Fig. 1; these components are therefore referenced with the same numerals, in particular microphone 110, A/D converter 112, speech recognition component 114, context mapping component 116, context mapping table 130, and RFID access controller (RAC) 118. As a functionality and interaction thereof is similar, the respective portions of the description of RFID control device 100 in Fig. 1 may be referred to in this regard. For the sake of illustration, it is further assumed that the RFID reader/writer device 120 is the same in Figs. 1 and 4.

The RFID control device 400 comprises a label information determination (LID) component 404 for determining label information to be written to RFID transponders such as transponder 402. The RFID transponder 402 may comprise a memory (not shown) into which label information can be written one time or multiple times.

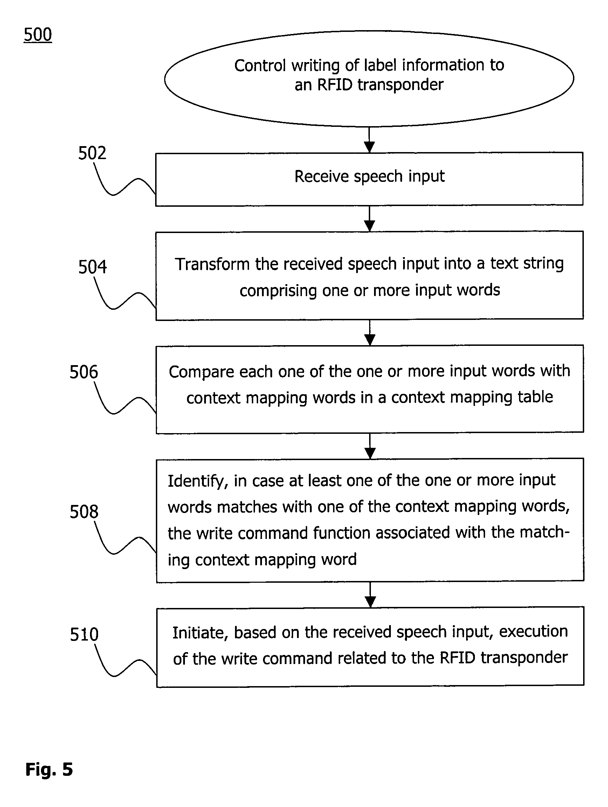

An exemplary operation of the RFID control device 400 will now be described with reference to the flow diagram in Fig. 5 illustrating a sequence 500 of operational steps. As sequence 200 in Fig. 2, the operational sequence 500 is another concrete embodiment of a technique for accessing an RFID transponder; namely, the sequence 500 illustrates a technique for writing label information such as an ID number to an RFID transponder such as transponder 102.

Steps 502 and 504 concerning the operation of microphone 110, A/D converter 112 and speech recognition component 114 correspond to steps 202 and 204 in Fig. 2. In the example illustrated in Fig. 4, a human user intends to write an ID number to RFID transponder 402 and inputs speech accordingly. The speech recognition component accordingly transforms the speech input into the text string 406 "write next ID". The context mapping component 116 accesses in step 506 the context mapping table 130 of Fig. 3 in order to compare the input words "write", "next" and "ID" with the context mapping words in the table 130 (the input word "ID" may be represented as "id" in text string 406, but is referred to with capital letters here for the sake of illustration).

As illustrated in Fig. 3, the input word "write" matches to the context mapping word CMW_0 associated with the access command function (ACF) "write_tag ()". There may be no other functions which have the context mapping word "write" associated with it, therefore the function "write tag ()" may be identified by the context mapping component 116 in step 208. The input words "next" and "ID" match to corresponding context mapping words associated with the ACF "determine_ID_number ()". The context mapping component 116 provides the identified function 408 "write_tag ()" without arguments (command parameters) to the RFID access controller 118 and the identified function "determine_ID_number ()" 409 to the label information determination component 404.

The determination component 404 implements a functionality associated with the function determine_ID_number (). In particular, in case no parameters have been specified, the determination component 404 may operate to determine an appropriate ID number to be written to the RFID transponder 402. For example, the determination component may calculate an allowable ID number using a pre-defined algorithm or may access a table 410 representing available ID numbers. In the example in Fig. 4 it is assumed that the determination component 404 determines "3456" as ID number 412 and provides the ID number 412 to the RFID access controller 118.

The RFID access controller 118 processes the ID number 412 as an argument indicating the corresponding command parameter to the access command Write_Tag for writing the ID number according to the command parameter to an RFID transponder. In step 510, the RFID access controller 118 initiates the execution of the "Write_Tag" write command. The controller 118 generates a control signal for performing the write command, wherein the command parameter representing the ID number 412 is incorporated into the control signal.

While it has been illustrated in Fig. 4 that the access command function 408 and the command parameter 412 are separately provided to the RFID access controller 118, in other embodiments, a control component (not shown) may insert label information such as ID number 412 determined by the label information determination component 404 into access command function 408 before providing the function 408 it to the RFID access controller 118.

Eventually the reader/writer device 120 performs write operation 414 via RF interface 108 according to the write command Write_Tag with command parameter "3456" as the ID number. Although not shown in Fig. 4, a read command may automatically be executed subsequently to the write command in order to verify that the ID number 412 has correctly been written to the RFID transponder 402. Furthermore, the ID number 412 written to and read from the RFID transponder 402 may be output onto at least one of a display, a loudspeaker and data file in a similar way as has been described in conjunction with Fig. 1 in order to inform the human user on the successful execution of the write command 414. It may be particularly useful to present the actually chosen ID number "3456" to the user as in the example illustrated in Fig. 4 the user only has indicated to write the "next ID" to the transponder 402 without actually inputting the concrete ID number.

The determination component 404 may determine ID numbers or other label information to be written to RFID transponders in various ways. A human user may for example, instead of speaking in ID numbers such as "857686 005026 285786 005", indicate textual data from which an ID number or portions thereof shall be derived, e.g. a name, an address, a date, etc. For example, consider the speech input (or text string) "write Vandinburg GmbH, Hannover, Germany, date of today, pallet 17", which indicates the sender of an object with an RFID transponder mounted thereto, a date and an arbitrary number. The determination component 404 may be adapted to determine an allowable ID number from such data.

For example, an ID number may be a concatenation of various ID number portions. A fixed ID number portion may for example be associated with the address "Vandinburg GmbH, Hannover, Germany" and may be stored in the ID table 412. A function represented in the context mapping table 130 may be identified based on the inputted address, wherein during execution the function accesses ID table 410 and returns the ID number portion as given therein. Other portions of the ID number may be calculated and/or arbitrarily chosen.

Generally, a storage component may comprise a mapping table associating at least portions of available ID numbers with data more appropriate for perception or recognition by human such as addresses, names, dates, etc.
A label information determination component may also be provided in a reading process as illustrated in Figs. 1 and 2. For example, a text string resulting from a speech input may be "determine which pallets are present with origin USA". In this case, the context mapping component 116 would identify a function for accessing multiple RFID transponders, namely all RFID transponders currently or during a given time period within an antenna coverage. The read command(s) would then request the ID numbers and/or originator addresses from label information stored on the available RFID transponders.

An output control system such as the component 122 described with reference to Fig. 1 may also have an ID table associated therewith, wherein ID number (portions) are associated with other data more convenient for human perception such as address data, but also media data such as audio data in order to output, instead of an ID number, an audio signal representing an address, data and pallet number, for example.

While the RFID control devices 100 and 400 have been described as different embodiments, it may be understood that both embodiments may together be implemented on the same hardware platform resulting in a single RFID control device for controlling one or more RFID reader/writer devices. Furthermore, the RFID control devices 100 and 400 have been described as including a speech input portion (comprising components such as microphone 110 and A/D converter 112), a speech recognition portion (comprising SR component 114 and context mapping component 116) and a portion to in fact control access to RFID transponders (comprising the RFID access controller 118). An access device including speech input portion, speech recognition portion and RFID access portion integrated on a single hardware platform may be, e.g., realized as a notebook including a microphone and a card slot with an RFID reader/writer card inserted therein and having speech recognition software implemented.

In other embodiments, some or all of the speech input portion, speech recognition portion and RFID access portion may be implemented on different hardware entities and may even be remotely arranged from each other. For example, a notebook may operate to receive speech input from a microphone connected therewith and to convert the speech input into access commands which are then provided via a LAN/WAN connection to an external RFID reader/writer device. The LAN connection may, e.g., be a wireless (WLAN or Bluetooth) connection.

As another example, the speech input portion may also provided separately from the speech recognition portion. For instance, a human user may use a wireless communication link and/or remote communication link for transmitting speech input (e.g. from a mobile phone) to a speech recognition portion, which may, for example, be hosted on a central server. The server would in turn provide RFID access commands to an RFID reader/writer either at the location of the human user or at a third location.

It is to be noted that, while the RFID access controller 118 is illustrated as a single functional entity in Figs. 1 and 4, the controller may also be implemented in a distributed way comprising several control modules. For example, a first control module may be provided near to the speech recognition portion in order to execute identified functions, while a second control module may be provided at the RFID reader/writer device and receives signalling from the first control module indicative of the access operations to be performed.

The techniques described herein can be used to provide faster and more reliable user-controlled access to RFID transponders. Controlling an access operation via speech accelerates the operation considerably in comparison to manually typing in a command and possibly a long ID number. For example, controlling RFID access via speech may be particularly advantageous for a user in an environment such as a warehouse, inventory, at a conveyor band, etc.

While the current invention has been described in relation to its preferred embodiments, it is to be understood that this disclosure is for illustrative purposes only. Accordingly, it is intended that the invention be limited only by the scope of the claims appended hereto.

## Claims

1. A method for controlling access to an RFID transponder, comprising the following steps:
- receiving (202, 502) speech input; and
- initiating (210, 510), based on the received speech input, execution of an access command related to the RFID transponder (102, 402).

2. The method according to claim 1,
wherein the access command comprises at least one of a read command (132) for reading label information (136) from the RFID transponder and a write command (408) for writing label information (412) to the RFID transponder.

3. The method according to claim 2,
wherein the step of initiating execution of the access command comprises
- converting the speech input into at least one of the read command and the write command; and
- providing the read and/or write command to at least one of an RFID reader and RFID writer.

4. The method according to claim 2 or 3,
comprising the further step of automatically determining, triggered by the speech input, at least a portion of the label information from predefined information.

5. The method according to any one of claims 2 to 4,
comprising the further step of determining at least a portion of the label information based on the speech input (406).

6. The method according to claim 5,
wherein label information is determined from a predefined mapping (410), in which input parameters determined from the speech input are associated with at least portions of the label information.

7. The method according to any one of the preceding claims,
wherein the step of initiating the execution of the access command comprises
- transforming (204, 504) the received speech input into a text string (128, 406) comprising one or more input words;
- comparing (206, 506) each one of the one or more input words with context mapping words (CMW_0) in a context mapping table (130), the context mapping words being associated with at least one access command function (ACF) for providing an access command for an RFID access device (120); and
- identifying (208, 508), in case at least one of the one or more input words matches with one of the context mapping words, the access command function associated with the matching context mapping word.

8. The method according to claim 7,
wherein a context mapping word represents in textual form an aspect of the access command or command parameter the context mapping word is associated with.

9. The method according to claim 7 or 8,
wherein multiple context mapping words represent different alias names of one and the same access command or command parameter.

10. The method according to any one of the preceding claims,
wherein multiple access commands are executed based on the received speech input.

11. The method according to any one of the preceding claims,
wherein multiple RFID transponders are accessed based on the received speech input.

12. The method according to any one of the preceding claims,
comprising the step of providing an acoustic output (126) indicative of the label information (136).

13. A computer program product comprising program code portions for performing the steps of any one of the preceding claims when the computer program product is executed on one or more computing devices.

14. The computer program product of claim 13, stored on a computer readable recording medium.

15. An RFID control device (100, 400) for controlling access to an RFID transponder (102, 402), comprising:
- a first component (110, 112) adapted to receive speech input; and
- a second component (114, 116, 118) adapted to initiate, based on the received speech input, execution of an access command related to the RFID transponder.

16. The RFID control device according to claim 15,
comprising at least one of an integrated RFID reader and RFID writer.

17. A context mapping table (130) comprising context mapping words (CMW_0) for comparison with input words representing a speech input in a speech recognition system (114, 116), wherein the context mapping words are associated with at least one access command function (ACF) for providing access commands for an RFID access device (120).
